# EUROPÄISCHE PATENTSCHRIFT

(11) **EP 1 312 836 B1**
(45) Veröffentlichungstag und Bekanntmachung des Hinweises auf die Patenterteilung: **29.06.2005**
(21) Anmeldenummer: 01127621.9
(22) Anmeldetag: 20.11.2001
(51) Int. Cl.: F16H 61/00

(54) **Hydraulisches Servo-System**
Hydraulic servo system
Système d'asservissement hydraulique

(43) Veröffentlichungstag der Anmeldung: 21.05.2003
(73) Patentinhaber: Ford Global Technologies, LLC, Dearborn, MI 48126 (US); Getrag Ford Transmissions GmbH, 50769 Köln (DE)
(72) Erfinder: Haas, Herbert, 52134 Herzogenrath (DE); Heider, Peter, 53881 Euskirchen (DE); Geffers, Peter, 50829 Köln (DE); Kirchhoffer, Johann, 50737 Köln (DE); Tissot, Andreas, 42897 Remscheid (DE)
(74) Vertreter: Drömer, Hans-Carsten, Dipl.-Ing.

(56) Entgegenhaltungen:
- EP-A- 0 845 382
- DE-A- 10 003 136
- US-A- 4 094 211

## Beschreibung

Die Erfindung betrifft ein hydraulisches Servo-system gemäß dem Oberbegriff des Patentanspruchs 1.

In der US 4 094 211, die als nächstliegender Stand der Technik angesehen wird, ist ein hydraulisches Servo-System zur Steuerung eines Automatikgetriebes offenbart, das einen Stelldruck bereitstellt mit einer nicht geraden Kennlinie. Dies wird erreicht, indem ein hydraulisches Servo-Ventil durch drei Steuerventile angesteuert wird, wobei das hydraulische Servo-Ventil drei Druckkammern mit effektiven Wirkflächen unterschiedlicher Größe aufweist. Die Steuerventile sind als Magnetventile ausgeführt, die von einer Steuereinheit entsprechend den vorliegenden Fahrzuständen und dem daraus erforderlichen Stelldruck geschaltet werden und so das Servo-Ventil beaufschlagen.

Durch Kombination der drei Steuerdrücke aus den drei Steuerventilen ergeben sich insgesamt sieben Stufen für das Servo-Ventil, die jeweils einem bestimmten Stelldruck entsprechen. Damit läßt sich der Stelldruck zwar stufenweise an eine nicht gerade Kennlinie anpassen, jedoch entsteht beim Übergang von einer Stufe zur Nächsten ein inhomogener Zustand.

Ein weiteres hydraulisches Servo-System ist aus der EP 0 845 382 bekannt, bei dem ein Stelldruck in Abhängigkeit zumindest einer Eingangsgröße gemäß einer nicht geraden Kennlinie bereitgestellt wird. Ein hydraulisches Servo-Ventil weist eine erste Druckkammer und eine zweite Druckkammer mit effektiven Wirkflächen unterschiedlicher Größe auf. Zur Regelung des Ausgangsdruckes des hydraulischen Servo-Ventils sind die erste Druckkammer und die zweite Druckkammer selektiv mit einem Vorsteuerdruck beaufschlagbar, wobei der Steuerdruck von einem Steuerventil gesteuert ist.

Diese bekannten Servo-Systeme werden zur Regelung insbesondere im Getriebe und Kupplungsbau für Kraftfahrzeuge eingesetzt. Bei diesem Anwendungsbereich muss ein Zuhaltedruck aufgebracht werden, dessen Druck abhängig vom Motordrehmoment geregelt werden sollte, damit die Zuhaltekraft den auftretenden Fahrsituationen hinreichend gerecht werden kann.

Einerseits muss das Getriebe beispielsweise Motordrehmomente von bis zu 400 Nm übertragen können, andererseits muss auch bei kleinen Drehmomenten im Kriechmodus, hier betragen die auftretenden Drehmomente etwa 8 bis 15 Nm, ein ruckfreier Betrieb möglich sein. Ferner muss ein Dauerbetrieb sowohl bei komplett geschlossener Kupplung als auch bei permanent durchrutschender Kupplung von der Regelung erfasst werden und auch ein Sonderbetriebszustand, wie er etwa beim Anfahren an einem Berg, im Schleppbetrieb oder beim Übergang von einem Betriebszustand zu einem anderen, etwa infolge eines Schaltvorganges, auftritt, von der Regelung erfasst werden können.

Die bekannten Regelungen nutzen hierzu ein Servo-System, das den Anpressdruck wenigstens entlang zweier Kennlinien zu modifizieren vermag. Hierbei wird im Bereich geringer Drehmomente eine flache Kennlinie bevorzugt sein, während im Bereich höherer Drehmomente eine steile Kennlinie vorgesehen ist. Obwohl diese bekannten Servo-Systeme bereits den Fahrsituationen im einzelnen hinreichend gerecht werden können, weisen sie doch einen erheblichen Nachteil auf. Die Umschaltung zwischen den Kennlinien erfolgt dadurch, daß innerhalb des hydraulischen Servo-Ventils ein Wechsel von der ersten zur zweiten Druckkammer bei Beaufschlagung des Steuerdruckes von dem ersten Steuerventil vorgenommen wird. Dieser Wechsel bewirkt die Änderung der Kennliniensteigung, was jedoch zu einer Inhomogenität im Übergangsbereich führt, der aus diesem Grund für Regelungszwecke nicht zur Verfügung steht. Es muss also definiert ein vorderer oder ein hinterer Zustand genutzt werden, um einen Betriebszustand im Übergangsbereich zu erfassen.

Aufgabe der Erfindung ist es daher, ein hydraulisches Servo-System zu schaffen, das eine leichte und übergangslose Regelung des aufgebrachten Arbeitsdruckes ermöglicht.

Diese Aufgabe wird erfindungsgemäß gelöst mit den Merkmalen des Patentanspruchs 1.

Durch die erfindungsgemäße Ausgestaltung des Servo-Systems kann nun eine durchgängig für den Regelkreis zur Verfügung stehende Kennlinie geschaffen werden, ohne daß im Bereich des Sprungs der Steigung der Kennlinie eine Inhomogenität auftritt. Ferner ist die Kennlinie in ihrer Steigung und in ihrem Verlauf weitgehend frei wählbar durch selektive Nutzung des ersten Steuerventils bzw. des zweiten Steuerventils.

Im Normalfall wird das erste Steuerventil die erste Druckkammer des hydraulischen Servo-Ventils mit dem ersten Vorsteuerdruck beaufschlagen. Anstelle nun diesen ersten Vorsteuerdruck auch zusätzlich in die zweite Druckkammer einzuleiten, so wie es bei den bekannten Ventilen der Fall ist, wird nun ein zweites Steuerventil genutzt, um einen zweiten Vorsteuerdruck aufzubringen, mit dem die zweite Druckkammer beaufschlagbar ist. Wenn im folgenden die Rede vom Vorsteuerdruck ist, ist darunter jeder Druck zu verstehen, der zum Regeln, Steuern oder Antrieb weiterer hydraulischer Komponenten dient.

Das erste Steuerventil und das zweite Steuerventil sind bevorzugt elektrohydraulische Ventile. Diese Ventile weisen eine Spule auf, die von der Regelung angesteuert werden kann und eine magnetische Kraft auf ein in dem Ventil angeordnetes Stellglied aufzubringen vermag. Durch diese Kraft und die hierdurch bewirkte Bewegung des Stellgliedes wird in dem elektromagnetischen Servo-Ventil der Vorsteuerdruck erzeugt, wobei bei einer bevorzugten Ausgestaltung der Erfindung das erste Steuerventil und das zweite Steuerventil unabhängig voneinander betätigt werden. Zur Regelung weist der Regelkreis Sensoren für die Erfassung der Betriebszustände des zu regelnden Systems auf. Bei einem Kraftfahrzeug mit geregelter Kupplung sind dies beispielsweise der aufgebrachte Kupplungsdruck, das Motordrehmoment und der Kupplungsschlupf, wobei die erfassten Größen auch indirekt über die bekannten Messverfahren bestimmt werden können. Das erste und das zweite Steuerventil können unabhängig voneinander steigende oder fallende Kennlinien aufweisen, wobei hier je nach Regelungseinsatz die verschiedensten Ventile zum Einsatz kommen können.

Um die Ventile durch die Regelung in einem vordefinierten Betriebszustand fahren zu können und geringe Systemschwankungen ausgleichen zu können, sind die ersten und die zweiten Steuerventile bevorzugt über erste und zweite Druckleitungen mit der ersten bzw. zweiten Druckkammer verbunden. In diesen Druckleitungen sind bei einer bevorzugten Ausgestaltung der Erfindung Leckageöffnungen vorgesehen, über die selektiv Systemdruck abgelassen werden kann, um die Stellglieder der ersten und zweiten Steuerventile geringfügig an die übrigen Systemvariablen anzupassen. Das erste und das zweite Steuerventil werden üblicherweise Federn aufweisen, die dem ersten bzw. zweiten Vorsteuerdruck permanent entgegenwirken. Auch das hydraulische Servo-Ventil kann zumindest eine dem Arbeitsdruck entgegenwirkende permanente Feder aufweisen.

Im Zusammenhang mit der vorliegenden Erfindung kann das Servo-System die unterschiedlichsten Steuerventile aufweisen. Ferner ist es möglich, das erste und das zweite Steuerventil mit elektrischen oder hydraulischen Vorsteuerstufen zu ergänzen, wobei auch eine Kombination aus beidem möglich ist. Das mit dem erfindungsgemäßen Servo-System aufgebaute Regelungssystem kann genutzt werden, um den Betriebsdruck auf eine Kupplung eines Kraftfahrzeuges aufzubringen. Ferner wird bevorzugt das Servo-System in Verbindung mit einem CVT-Getriebe genutzt, um die Anpressdrücke der Übersetzungsregelung bzw. - steuerung elektro-hydraulisch regeln zu können. In diesem Fall erfasst die Elektrik den Betriebszustand von Fahrzeug und Getriebe über Sensoren, berechnet die Sollwerte für die Hydraulikdrücke und vergleicht dann die Sollwerte mit den Ist-Werten zur Erzeugung der Stellgrößen in Form von elektrischen Spannungen. Über diese Spannungen werden dann die Vorsteuerdrücke erzeugt, die dann über das hydraulisch angesteuerte Servo-Ventil die Aktuatoren der Regelung zu stellen vermögen.

Durch die erfindungsgemäße Aufteilung des hydraulischen Steuerdrucks auf zwei Vorsteuerdrücke, die hydraulisch völlig voneinander getrennt sind, kann nun die Kennlinie des Gesamtsystems beliebig modifiziert werden. Selbstverständlich ist es auch möglich, weitere Steuerventile und Vordrücke vorzusehen, um noch größere Freiheiten bei der Modulation der Kennlinie zu erhalten.

Während der Regelung kann beispielsweise die steile Kennlinie zur groben Einstellung des zu regelnden Arbeitsdruckes genutzt werden, während die flache Kennlinie zur Feineinstellung genutzt wird. Auf diese Weise sind sehr stabile und robuste Regelvorgänge erreichbar und mangels einer Rückkopplung bei der Ansteuerung der Steuerventile ist stets eine Stabilität des Regelkreislaufs bezüglich der Grobregelung erzielbar.

Das erfindungsgemäße Servo-System kann in Verbindung mit der Erzeugung der Drücke bzw. Druckverläufe in beliebigen Kupplungen, in stufenlosen Riemenscheibenumschlingungsgetrieben oder auch in Verbindung mit Schalt- und Anfahrkupplungen genutzt werden. Auch ein Einsatz in Wandler-Überbrückungskupplungen von Stufenautomaten, von Doppelkupplungsgetrieben oder automatisierten Handschaltgetrieben ist möglich. Insbesondere kann das Servo-System zur Regelung von Überschneidungssteuerungen bei Schaltvorgängen eingesetzt werden, unabhängig von der Getriebebauart.

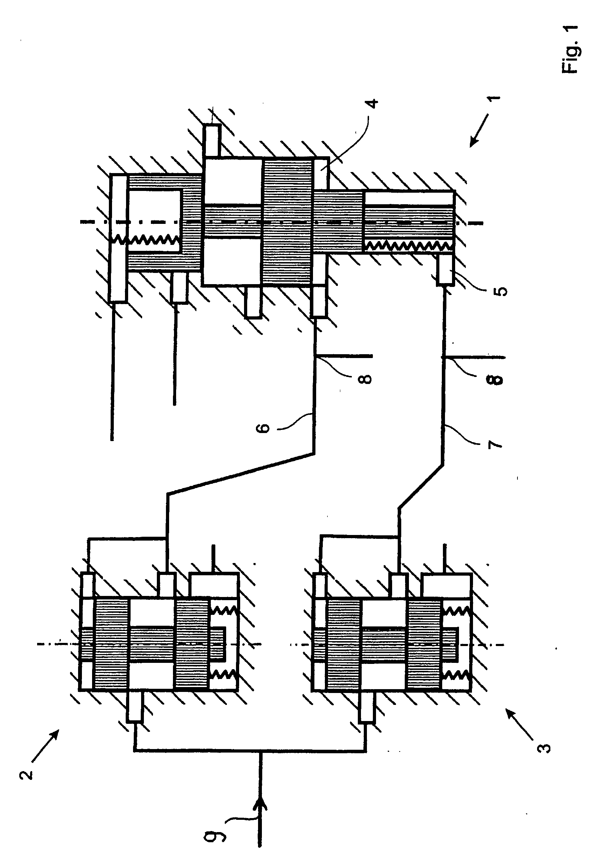

Weitere Merkmale und Vorteile der Erfindung ergeben sich aus den Unteransprüchen und aus der nachfolgenden Beschreibung eines bevorzugten Ausführungs- und Anwendungsbeispiels anhand der Zeichnung, die in Figur 1 ein Blockschaltbild eines erfindungsgemäßen Servo-Systems zeigt.

Das dargestellte Blockschaubild zeigt ein erfindungsgemäßes Servo-System mit einem ersten Steuerventil 2, das eine erste Druckkammer 4 des hydraulischen Servo-Ventils 1 mit einem Vorsteuerdruck zu beaufschlagen vermag. Zusätzlich zum ersten Steuerventil 2 ist ein zweites Steuerventil 3 vorgesehen, das anstelle des bisher üblichen Umschaltens eine zweite Druckkammer 5 mit einem zweiten Vorsteuer- oder Regeldruck beaufschlagt. Das erste Steuerventil 2 und das zweite Steuerventil 3 sind als elektro-hydraulische Ventile ausgebildet, die beispielsweise über magnetische Spulen festgestellt werden können.

Das hydraulische Sero-Ventil 1 weist in der ersten Druckkammer 4 und in der zweiten Druckkammer 5 jeweils unterschiedliche oder gleiche effektive Wirkflächen auf. Durch Modifikation der Größe dieser Wirkflächen kann die Charakteristik des Ventils und damit im wesentlichen auch der hydraulischen Servo-Regelung weitgehend frei gewählt werden. Durch Beaufschlagung der ersten Druckkammer 4 mit dem ersten Vorsteuerdruck tritt eine Grobregelung zur groben Einstellung der Kennlinie des Servo-Systems ein. Die Feinregelung wird durch die Beaufschlagung der zweiten Druckkammer 5 mit dem zweiten Steuerdruck bewirkt, wobei durch die Kombination beider Mechanismen eine beliebige Wahl der Kennlinie des Gesamtsystems möglich wird. Insbesondere treten Inhomogenitäten bei der Umschaltung von Ventilen nicht mehr auf, da das erste Steuerventil 2 und das zweite Steuerventil 3 kontinuierlich arbeiten können.

Das erste Steuerventil 2 und das zweite Steuerventil 3 sind über eine erste Druckleitung 6 und eine zweite Druckleitung 7 mit der ersten Druckkammer 4 bzw. der zweiten Druckkammer 5 verbunden. In diesen Druckleitungen 6, 7 befinden sich Leckageöffnungen 8, über die zur Feineinstellung der Position eines Stellgliedes des ersten Steuerventils 2 bzw. des zweiten Steuerventils 3 selektiv der Druck in der ersten Druckleitung 6 oder der zweiten Druckleitung 7 abgelassen werden kann. Über die Speisedruckleitung 9 erfolgt die Versorgung der Steuerventile 2 und 3.

Außerdem wird eine Feinregelung durch die Beaufschlagung der zweiten Druckkammer 5 mit dem zweiten Steuerdruck bewirkt, wobei durch die Kombination beider Mechanismen eine beliebige Wahl der Kennlinie des Gesamtsystems möglich ist.

### Bezugszeichenliste:

- 1: Hydraulisches Servo-Ventil
- 2: Erstes Steuerventil
- 3: Zweites Steuerventil
- 4: Erste Druckkammer
- 5: Zweite Druckkammer
- 6: Erste Druckleitung
- 7: Zweite Druckleitung
- 8: Leckageöffnung
- 9: Speisedruckleitung

## Patentansprüche

1. Hydraulisches Servo-System zur Bereitstellung eines Stelldruckes in Abhängigkeit zumindest einer Eingangsgröße gemäß einer nicht geraden Kennlinie, insbesondere für die Bereitstellung eines Arbeitsdrucks zur Regelung eines Anpressdrucks einer Kraftfahrzeugkupplung oder einer Riemenscheibe eines stufenlosen Riemenscheibenumschlingungsgetriebes, mit einem hydraulischen Servo-Ventil (1) und einem ersten Steuerventil (2), wobei das hydraulische Servo-Ventil (1) eine erste Druckkammer (4) und eine zweite Druckkammer (5) mit effektiven Wirkflächen unterschiedlicher oder gleicher Größe aufweist und zur Regelung des Ausgangsdruckes des hydraulischen Servo-Ventils (1) die erste Druckkammer (4) und die zweite Druckkammer (5) selektiv mit einem Vorsteuerdruck beaufschlagbar sind, wobei
die erste Druckkammer (4) mit einem von dem ersten Steuerventil (2) bereitgestellten ersten Vorsteuerdruck beaufschlagbar ist und ein zweites Steuerventil (3) vorgesehen ist, das einen zweiten Vorsteuerdruck bereitzustellen vermag, mit dem die zweite Druckkammer (5) beaufschlagbar ist,
**dadurch gekennzeichnet, daß**
das erste Steuerventil (2) und das zweite Steuerventil (3) Servo-Ventile mit unabhängig voneinander steigender und/oder fallender Kennlinie sind.

2. Hydraulisches Servo-System nach Anspruch 1,
**dadurch gekennzeichnet, daß**
das erste Steuerventil (2) und das zweite Steuerventil (3) unabhängig voneinander betätigbar sind.

3. Hydraulisches Servo-System nach Anspruch 2,
**dadurch gekennzeichnet, daß**
das erste Steuerventil (2) und das zweite Steuerventil (3) elektrohydraulische Ventile sind.

4. Hydraulisches Servo-System nach einem der vorhergehenden Ansprüche,
**dadurch gekennzeichnet, daß**
das erste Steuerventil (2) über eine erste Druckleitung (6) mit der ersten Druckkammer (4) und das zweite Steuerventil (3) über eine zweite Druckleitung (7) mit der zweiten Druckkammer (5) verbunden sind, wobei zur Triggerung des ersten Steuerventils (2) und/oder des zweiten Steuerventils (3) in der ersten Druckleitung (6) und/oder der zweiten Druckleitung (7) Leckageöffnungen (8) zur regelungsabhängigen Druckabsenkung angeordnet sind.

5. Hydraulisches Servo-System nach einem der vorhergehenden Ansprüche,
**dadurch gekennzeichnet, daß**
das erste Steuerventil (2) und das zweite Steuerventil (3) dem ersten Vorsteuerdruck und dem zweiten Vorsteuerdruck entgegenwirkende Federn aufweisen.

6. Hydraulisches Servo-System nach einem der vorhergehenden Ansprüche,
**dadurch gekennzeichnet, daß**
das hydraulische Servo-Ventil (1) zumindest eine dem Arbeitsdruck entgegenwirkende Feder aufweist.

7. Hydraulisches Servo-System nach dem vorhergehenden Anspruch,
**dadurch gekennzeichnet, daß**
das erste Steuerventil (2) und/oder das zweite Steuerventil (3) elektrische und/oder hydraulische Vorsteuerstufen aufweisen.

8. Kraftübertragung eines Kraftfahrzeugs mit einem Antrieb und einem Abtrieb, wobei eine Motorkraft über einen durch den Stelldruck betätigbaren Wandler von dem Antrieb auf den Abtrieb übertragbar ist,
**dadurch gekennzeichnet, daß**
der Stelldruck von einem Servo-System nach einem der vorhergehenden Ansprüche aufbringbar ist.

9. Kraftübertragung nach dem vorhergehenden Anspruch,
**dadurch gekennzeichnet, daß**
der Wandler eine Reibkupplung ist.

10. Kraftübertragung nach dem vorhergehenden Anspruch,
**dadurch gekennzeichnet, daß**
der Wandler eine Anfahr- und/oder eine Schaltkupplung ist.

11. Kraftübertragung nach Anspruch 8,
**dadurch gekennzeichnet, daß**
der Wandler ein stufenlosen Riemenscheibenumschlingungsgetriebe ist.

## Claims

1. Hydraulic servo system for the provision of an actuating pressure as a function of at least one input variable according to a non-straight characteristic curve, in particular for the provision of a working pressure for regulating a pressure force of a motor vehicle clutch or of a belt pulley of a continuously variable belt-pulley wrap-around transmission, with a hydraulic servo valve (1) and a first control valve (2), the hydraulic servo valve (1) having a first pressure chamber (4) and a second pressure chamber (5) with effective active surfaces of different or identical size, and, for regulating the output pressure of the hydraulic servo valve (1), the first pressure chamber (4) and the second pressure chamber (5) being capable of being acted upon selectively by a pilot control pressure, the first pressure chamber (4) being capable of being acted upon by a first pilot control pressure provided by the first control valve (2), and a second control valve (3) being provided, which can provide a second pilot control pressure by which the second pressure chamber (5) can be acted upon, **characterized in that** the first control valve (2) and the second control valve (3) are servo valves with a characteristic curve rising and/or falling independently of one another.

2. Hydraulic servo system according to Claim 1,
**characterized in that** the first control valve (2) and the second control valve (3) can be actuated independently of one another.

3. Hydraulic servo system according to Claim 2, **characterized in that** the first control valve (2) and the second control valve (3) are electrohydraulic valves.

4. Hydraulic servo system according to one of the preceding claims, **characterized in that** the first control valve (2) is connected to the first pressure chamber (4) via a first pressure line (6) and the second control valve (3) is connected to the second pressure chamber (5) via a second pressure line (7), leakage orifices (8) for regulation-dependent pressure lowering being arranged in the first pressure line (6) and/or the second pressure line (7) in order to trigger the first control valve (2) and/or the second control valve (3).

5. Hydraulic servo system according to one of the preceding claims, **characterized in that** the first control valve (2) and the second control valve (3) have springs counteracting the first pilot control pressure and the second pilot control pressure.

6. Hydraulic servo system according to one of the preceding claims, **characterized in that** the hydraulic servo valve (1) has at least one spring counteracting the working pressure.

7. Hydraulic servo system according to the preceding claim, **characterized in that** the first control valve (2) and/or the second control valve (3) have/has electric and/or hydraulic pilot control stages.

8. Power transmission of a motor vehicle with a drive and with an output, an engine power being capable of being transmitted from the drive to the output via a converter actuable by means of the actuating pressure, **characterized in that** the actuating pressure can be applied by a servo system according to one of the preceding claims.

9. Power transmission according to the preceding claim, **characterized in that** the converter is a friction clutch.

10. Power transmission according to the preceding claim, **characterized in that** the converter is a starting and/or shift clutch.

11. Power transmission according to Claim 8, **characterized in that** the converter is a continuously variable belt-pulley wrap-around transmission.

## Revendications

1. Servosystème hydraulique destiné à délivrer une pression de réglage en fonction d'au moins une grandeur d'entrée selon une courbe non linéaire, et en particulier à délivrer une pression de travail en vue de la régulation d'une pression de poussée d'un embrayage de véhicule automobile ou de la poulie de courroie d'un mécanisme progressif d'enroulement d'une courroie autour d'une poulie, qui présente une servovanne hydraulique (1) et une première vanne de commande (2), la servovanne hydraulique (1) présentant une première chambre de compression (4) et une deuxième chambre de compression (5) dont les surfaces actives efficaces sont de tailles différentes ou identiques, la première chambre de compression (4) et la deuxième chambre de compression (5) pouvant recevoir sélectivement une pression de commande préalable pour réguler la pression de sortie de la servovanne hydraulique (1), la première chambre de compression (4) pouvant recevoir une première pression de commande préalable délivrée par la première vanne de commande (2) et une deuxième vanne de commande (3) capable de délivrer une deuxième pression de commande préalable qui peut être délivrée à la deuxième chambre de compression (5) étant prévue, **caractérisé en ce que** la première vanne de commande (2) et la deuxième vanne de commande (3) présentent des servovannes dont les courbes croissent et/ou décroissent indépendamment l'une de l'autre.

2. Servosystème hydraulique selon la revendication 1, **caractérisé en ce que** la première vanne de commande (2) et la deuxième vanne de commande (3) peuvent être actionnées indépendamment l'une de l'autre.

3. Servosystème hydraulique selon la revendication 2, **caractérisé en ce que** la première vanne de commande (2) et la deuxième vanne de commande (3) sont des vannes électrohydrauliques.

4. Servosystème hydraulique selon l'une des revendications précédentes, **caractérisé en ce que** la première vanne de commande (2) est reliée à la première chambre de compression (4) par l'intermédiaire d'une première conduite sous pression (6) et la deuxième vanne de commande (3) est reliée à la deuxième chambre de compression (5) par l'intermédiaire d'une deuxième conduite sous pression (7), des ouvertures de fuite (8) destinées à diminuer la pression en fonction de la régulation étant agencées dans la première conduite sous pression (6) et/ou dans la deuxième conduite sous pression (7) afin d'activer la première vanne de commande (2) et/ou la deuxième vanne de commande (3).

5. Servosystème hydraulique selon l'une des revendications précédentes, **caractérisé en ce que** la première vanne de commande (2) et la deuxième vanne de commande (3) présentent des ressorts qui s'opposent à la première pression de commande préalable et à la deuxième pression de commande préalable.

6. Servosystème hydraulique selon l'une des revendications précédentes, **caractérisé en ce que** la servovanne hydraulique (1) présente au moins un ressort qui s'oppose à la pression de travail.

7. Servosystème hydraulique selon la revendication précédente, **caractérisé en ce que** la première vanne de commande (2) et/ou la deuxième vanne de commande (3) présentent des étages électriques et/ou hydrauliques de commande préalable.

8. Transmission d'un véhicule automobile, qui présente un entraînement et un train entraîné, un convertisseur qui peut être entraîné par l'intermédiaire d'une pression de réglage pouvant transmettre une force motrice de l'entraînement au train entraîné, **caractérisée en ce que** la pression de réglage peut être apportée par un servosystème selon l'une des revendications précédentes.

9. Transmission de force selon la revendication précédente, **caractérisée en ce que** le convertisseur est un embrayage à friction.

10. Transmission de force selon la revendication précédente, **caractérisée en ce que** le convertisseur est un accouplement de démarrage et/ou un embrayage.

11. Transmission de force selon la revendication 8, **caractérisé en ce que** le convertisseur est un mécanisme progressif d'enroulement d'une courroie autour d'une poulie.
